# EUROPEAN PATENT APPLICATION

(11) **EP 4 660 846 A1**
(43) Date of publication of application: **10.12.2025**
(21) Application number: 25180388.8
(22) Date of filing: 03.06.2025
(51) Int. Cl.: G06F 16/93

(54) **SYSTEMS AND METHODS FOR DISAGGREGATING A SET OF DOCUMENTS**

(30) Priority: 04.06.2024 US 202463655848 P; 13.02.2025 US 202519053255
(71) Applicant: Palantir Technologies Inc., Denver, CO 80202 (US)
(72) Inventor: TURCATO, Mark, New York (US)
(74) Representative: Sayer, Robert David

(57) **Abstract**

In some examples, systems and methods for disaggregating a set of documents are provided. An example method includes receiving the set of documents. In some examples, the set of documents include a plurality of pages. In some examples, the method further includes extracting a plurality of content items from the plurality of pages and providing the plurality of extracted content items to a machine-learning model. In some examples, the machine-learning the model is trained to generate content vectors. In some examples, the method further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. In some examples, the segmentation option indicates that a group of pages in the plurality of pages belong to a specific document.

## Description

### CROSS REFERENCE TO RELATED APPLICATIONS

This application claims priority to U.S. Provisional Application No. 63/655,848, entitled "SYSTEMS AND METHODS FOR DISAGGREGATING A SET OF DOCUMENTS," and filed on June 4, 2024.

### TECHNICAL FIELD

Certain embodiments of the present disclosure relate to disaggregating a set of documents. More particularly, certain embodiments of the present disclosure relate to determining segmentation options for disaggregating a set of documents.

### BACKGROUND

When digitizing physical documents, it is common to scan pages from multiple physical documents and add all of the scanned pages from the multiple physical documents into an aggregated set of documents (e.g., a single PDF). When working with such scanned documents in a data retrieval context, it can be challenging to identify the boundaries of the original documents without the help of subject matter experts.

Hence, it is desirable to improve techniques for disaggregating a set of documents.

### SUMMARY

Certain embodiments of the present disclosure relate to disaggregating a set of documents. More particularly, certain embodiments of the present disclosure relate to determining segmentation options for disaggregating a set of documents.

At least some aspects of the present disclosure are directed to a method for disaggregating a set of documents. The method includes receiving the set of documents. The set of documents includes a plurality of pages. The method further includes extracting a plurality of content items from the plurality of pages, and providing the plurality of extracted content items to a machine-learning model. The machine-learning model is trained to generate content vectors. The method further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. The segmentation option indicates that a group of pages in the plurality of pages belong to a specific document. In some non-limiting examples, the set of documents are within a single file. The method is performed using one or more processors.

At least some aspects of the present disclosure are directed to a system for disaggregating a set of documents. The system includes at least one processor, and at least one memory storing instructions that, when executed by the at least one processor, cause the system to perform a set of operations. The set of operations includes: receiving the set of documents. The set of documents includes a plurality of pages. The set of operations further includes extracting a plurality of content items from the plurality of pages, and providing the plurality of extracted content items to a machine-learning model. The machine-learning model is trained to generate content vectors. The set of operations further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. The segmentation option indicates that a group of pages in the plurality of pages belong to a specific document. In some non-limiting examples, the set of documents are within a single file.

At least some aspects of the present disclosure are directed to a method for disaggregating a set of documents. The method includes receiving the set of documents. The set of documents includes a plurality of pages. The set of documents corresponds to a plurality of documents. The method further includes extracting a plurality of content items from the plurality of pages, and providing the plurality of extracted content items to a machine-learning model. The machine-learning model is trained to generate content vectors. The method further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. The segmentation option indicates that a group of pages in the plurality of pages belong to a specific document of the plurality of documents. The method further includes outputting an indication of the segmentation option, thereby enabling the disaggregation of the set of documents. In some non-limiting examples, the set of documents are within a single file. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 illustrates a simplified diagram showing a method for disaggregating a set of documents, according to certain embodiments of the present disclosure.
FIG. 2 illustrates an example system for disaggregating a set of documents, according to certain embodiments of the present disclosure.
FIG. 3 illustrates an example diagram of generating content vectors, according to certain embodiments of the present disclosure.
FIG. 4 illustrates an example diagram of identifying nearest labelled pages to a given page, according to certain embodiments of the present disclosure.
FIG. 5 illustrates an example diagram of determining potential segmentation options, according to certain embodiments of the present disclosure.
FIG. 6 illustrates another example diagram of determining potential segmentation options, according to certain embodiments of the present disclosure.
FIG. 7 illustrates an example diagram of calculating distances related to segmentation options, according to certain embodiments of the present disclosure.
FIG. 8 illustrates an example diagram of determining which combination of segmentation options minimizes the total distance for disaggregation, according to certain embodiments of the present disclosure.
FIG. 9 illustrates an example diagram of a dynamic programming approach for segmenting a set of documents, according to certain embodiments of the present disclosure.
FIG. 10 illustrates an example diagram of segmenting a set of documents, according to certain embodiments of the present disclosure.
FIG. 11 illustrates a simplified diagram showing a computing system for disaggregating a set of documents, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods are incredibly inefficient, in terms of time and computing resources, at identifying the boundaries of original documents in a set of documents. For example, using conventional systems, pages from multiple physical documents may all be scanned into a single virtual document. However, using those conventional systems, subject matter experts are often required to identify the boundaries of the multiple documents within the single document, which is a time-consuming and inefficient process. Further, in conventional techniques which rely on subject matter experts to identify document boundaries, such techniques would be inoperable without the presence of the necessary subject matter experts.

Various embodiments of the present disclosure can achieve benefits and/or improvements by a computing system implementing techniques for automatically determining segmentation options for disaggregating a set of documents. In some embodiments, benefits include improved accuracy for identifying the boundaries of multiple documents that are present in a set of documents. In some embodiments, benefits include improved efficiency for segmenting the set of documents into the multiple documents that are present in the set of documents. For example, the improved efficiency can include segmenting the set of documents materially faster than conventional techniques and/or segmenting the set of documents using relatively fewer computational resources (e.g., processing power and/or memory) than conventional techniques. Additional and/or alternative benefits should be recognized by those of ordinary skill in the art, at least in light of the teachings provided herein.

In some examples, it is common practice for entities, such as companies, when digitizing physical documents to scan pages from multiple physical documents (perhaps all of the physical documents in one or more physical filing folders) and add all of the scanned pages from the multiple physical documents into a single virtual document. In some examples, when working with such scanned documents in a data retrieval context, it can be very challenging to identify the boundaries of the original documents except with the help of subject matter experts. Conventional systems do not provide sufficient accuracy for identifying the boundaries of the original documents.

According to some embodiments, documents that are being scanned and combined in a virtual set of documents (e.g., a virtual document combining virtual representations of the scanned documents) can relate to various industries. For example, the documents may relate to the agriculture industry, the restaurant industry, the oil and gas industry, the technology industry, the healthcare industry, the automotive industry, the financial services industry, the retail industry, or any other industry that may be recognized by those of ordinary skill in the art. In some examples, the documents may have certain document types such as business correspondence, leases, contracts, memorandums, purchase orders, or other document types that may be recognized by those of ordinary skill in the art. In some examples, techniques provided herein have broad applicability to any industry that has undergone a digitization process that includes aggregating multiple physical documents into a single virtual document.

In some examples, multiple physical documents are aggregated into a single virtual document. In some examples, multiple virtual documents are aggregated into a single virtual document. In some examples, the term "virtual document" used herein can refer to any of a plurality of different types of virtual documents. For example, the virtual document can be a portable document format (PDF) document, Word (DOCX) document, joint photographic experts group (JPEG) document, Excel (XLSX) document, PowerPoint (PPTX) document, comma-separated values (CSV) document, plain text (TXT) document, or another type of virtual document that may be recognized by those of ordinary skill in the art.

In some examples, techniques provided herein can be used to address a special case of the general problem of "data chunking," which is a topic of great interest at the moment. In some examples, techniques provided herein relate to generating semantically meaningful "chunks" of unstructured data to increase utility of processing the data with machine-learning models, such as language models, large language models (LLMs), generative artificial intelligence (AI) models, and/or the like. In some embodiments, a generative AI model includes training data embedded in the model. In certain embodiments, a generative AI model is a type of AI model that can be used to produce various type of content, such as text, images, videos, audio, 3D (three-dimensional) data, 3D models, and/or the like. In some embodiments, a language model or a large language model (LLM), which is a type of generative AI models, includes content and training data embedded in the model. In certain embodiments, a generative AI model may be subject to greater risk of data leaks with the training data embedded in the model.

In some embodiments, the machine learning model is a language model ("LM") that may include an algorithm, rule, model, and/or other programmatic instructions that can predict the probability of a sequence of words. In some embodiments, a language model may, given a starting text string (e.g., one or more words), predict the next word in the sequence. In certain embodiments, a language model may calculate the probability of different word combinations based on the patterns learned during training (based on a set of text data from books, articles, websites, audio files, etc.). In some embodiments, a language model may generate many combinations of one or more next words (and/or sentences) that are coherent and contextually relevant. In certain embodiments, a language model can be an advanced artificial intelligence algorithm that has been trained to understand, generate, and manipulate language. In some embodiments, a language model can be useful for natural language processing, including receiving natural language prompts and providing natural language responses based on the text on which the model is trained. In certain embodiments, a language model may include an n-gram, exponential, positional, neural network, and/or other type of model.

In certain embodiments, the machine learning model is a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pretrained Transformer 3 (GPT-3) model, a GPT 3.5-turbo model, a Claude model, a command-xlang model, a bidirectional encoder representations from transformers (BERT) model, a pathways language model (PaLM) 2, and/or the like. Thus, a prompt may be provided for processing by the LLM, which thus generates a recommendation accordingly.

In some examples, techniques provided herein rely on several technologies, such as optical character recognition, generation of content embeddings (e.g., semantically meaningful vector representations of content), and/or efficient approximate K-Nearest Neighbor (KNN) vector search backed by a vector database.

In some examples, the solution provided herein uses labelled examples of the documents which a user is looking to extract. In some examples, the labelling is generated by a human (or perhaps a machine-learning model, such as a generative AI model, that is trained to perform the labelling). In some examples, processes provided herein begin with receiving labelled data (e.g., labelled documents). In some examples, for a given document that the user is trying to segment and/or disaggregate, systems provided herein can identify, for each page, the n (some small number, such as 10) nearest pages from a labelled dataset (e.g., a dataset of labelled documents, a dataset of labelled pages). In some examples, the nearest pages are determined using a vector distance metric (e.g., cosine distance = 1 - cosine similarity), which can be applied to vectors corresponding to each respective page. In some examples, the vectors are content vectors. In some examples, the vectors are semantic embedding vectors. In some examples, each of the matches (e.g., nearest pages) represents a segmentation option or strategy. In some examples, the task then is to find which combination of these segmentation options minimizes a total distance (e.g., vector distance) between a proposed labeled documents and the original document. In some examples, minimizing the total distance can be completed with a dynamic programming algorithm which performantly finds the best (e.g., smallest total distance) solution.

In some examples, the techniques provided herein are implemented via a software-as-a-service (SaaS) platform. In some examples, the SaaS platform is a cloud-based software platform. In some examples, techniques provided herein can further structure data using entity extraction via an LLM. In some examples, documents that are segmented according to techniques provided herein can be input to various data retrieval workflows, such as those involving semantic search and/or retrieval augmented generation (RAG).

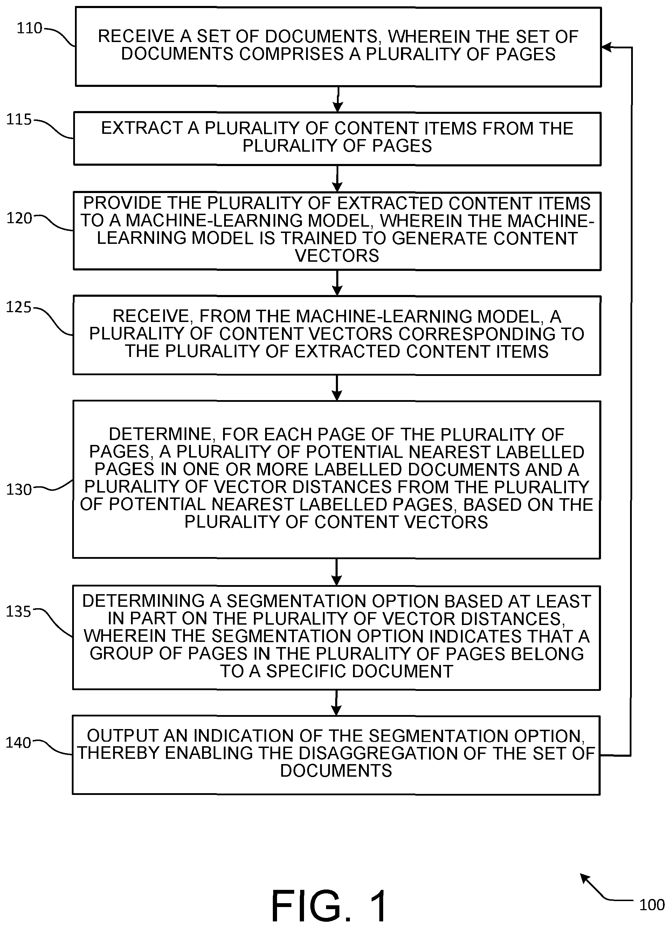

FIG. 1 is a simplified diagram showing a method 100 for disaggregating a set of documents according to certain embodiments of the present disclosure. This diagram is merely an example. One of ordinary skill in the art would recognize many variations, alternatives, and modifications. The method 100 for disaggregating a set of documents includes processes 110, 115, 120, 125, 130, 135, and 140. Although the above has been shown using a selected group of processes for the method 100 for disaggregating a set of documents, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

According to some embodiments, at the process 110, a set of documents is received. In some examples, the set of documents includes a plurality of pages. In some examples, the set of documents includes a plurality of pages not in an order. For example, the set of documents include a plurality of pages in the sequence of the first page being Page 1 of Document 1, the second page being Page 5 of Document 2, the third page being Page 4 of Document 1. In some examples, the set of documents corresponds to a plurality of documents. For example, a user may have scanned a plurality of documents and combined them into a single set of documents, such as a single virtual document. In some examples, each page of the document is associated with a page position (e.g., page 1, page, 2, etc.) of a document in the set of documents.

In some examples, the plurality of documents can relate to one or more industries. For example, the documents may relate to the agriculture industry, the restaurant industry, the oil and gas industry, the technology industry, the healthcare industry, the automotive industry, the financial services industry, the retail industry, or any other industry that may be recognized by those of ordinary skill in the art.

In some examples, one or more documents of the plurality of documents are labelled with a corresponding document type. In some examples, the document type may be business correspondence, a lease, a contract, a memorandum, a survey, an administrative document, and/or a purchase order. In some examples, other document types may be recognized by those of ordinary skill in the art. In some examples, the set of documents include a first document of a first document type and a second document of a second document type different from the first document type.

In some examples, multiple physical documents are aggregated into a single virtual document. In some examples, multiple virtual documents are aggregated into a single virtual document. In some examples, the term "virtual document" used herein can refer to any of a plurality of different types of virtual documents. For example, the virtual document can be a portable document format (PDF) document, Word (DOCX) document, joint photographic experts group (JPEG) document, Excel (XLSX) document, PowerPoint (PPTX) document, comma-separated values (CSV) document, plain text (TXT) document, or another type of virtual document that may be recognized by those of ordinary skill in the art.

According to some embodiments, at the process 115, a plurality of content items are extracted from the plurality of pages. In some examples, the extracting may be performed via optical character recognition (OCR). In some examples, OCR technology uses algorithms and/or pattern recognition to identify characters, words, and/or other elements within an image or document, and then converts them into machine-readable text. In some examples, the extracting may be performed via optical image recognition (OIR). In some examples, OIR technology uses algorithms to recognize and/or interpret entire images (e.g., as opposed to just text), for example, to extract image embeddings (e.g., image vectors).

In some examples, the extracting includes providing each document of the set of documents to a machine-learning model and receiving, from the machine-learning model, the extracted content. In some examples, the machine-learning model is an LLM. In some examples, the set of documents include at least one of text or an image. In some examples, the set of documents include both text and an image. In some examples, the extracted content is generated based on the at least one of text or an image.

According to some embodiments, at the process 120, the plurality of extracted content items are provided to a machine-learning model. In some examples, the machine-learning model is trained to generate content vectors. In some examples, the machine-learning model is trained to generate semantic embeddings and/or semantic vectors. In some examples, the term semantic as used herein refers to taking into account the abstract meaning of a content item, such as based on contextual information.

According to some embodiments, at the process 125, a plurality of content vectors are received from the machine-learning model. In some examples, the plurality of content vectors correspond to the plurality of extracted content items. For example, a first content vector of the plurality of content vectors may correspond to a first extracted content item of the plurality of extracted content items and a second content vector of the plurality of content vectors may correspond to a second extracted content item of the plurality of extracted content items.

According to some embodiments, at the process 130, for each page of the plurality of pages, a plurality of potential nearest labelled pages in one or more labelled documents and a plurality of vector distances from the plurality of potential nearest labelled pages are determined, based on the plurality of content vectors. In some examples, the plurality of potential nearest labelled pages are selected from a data set of labelled pages. In some examples, the data set of labelled pages is manually generated. In some examples, the data set of labelled pages is generated via an LLM that is capable of labelling pages.

In some examples, the plurality of potential nearest labelled pages are determined using a search method, such as a K-Nearest Neighbor (KNN) search method. In some examples, each potential nearest labelled page of the plurality of potential nearest labelled pages is associated with a content similarity to the respective page for which the plurality of potential nearest labelled pages are determined. In some examples, the content similarity is a semantic similarity (e.g., a similarity based on abstract meaning and/or contextual information).

In some examples, the plurality of potential nearest labelled pages are determined by calculating the plurality of vector distances. In some examples, each vector distance of the plurality of vector distances is a distance between the content vector corresponding to the each page and the content vector corresponding to another page of the plurality of pages. In some examples, the plurality of potential nearest labelled pages are selected to be a predetermined number of the pages of the plurality of pages with content vectors that are closest in distance to the each page. For example, the predetermine number may be ten pages, such that the plurality of potential nearest labelled pages is the ten nearest labelled pages to a given page in the plurality of pages. In some examples, the plurality of vector distances are calculated using cosine similarity.

According to some embodiments, at the process 135, a segmentation option or strategy is determined based at least in part on the plurality of vector distances. In some examples, the segmentation option indicates that a group of pages in the plurality of pages belong to a specific document. In some examples, the segmentation option is determined by selecting the group of pages among a plurality of groupings of the plurality of pages, such that a summation of the vector distances between neighboring pages in the group of pages (e.g., within the selected grouping) is minimized. In some examples, each page of the plurality of pages is part of no more than one selected grouping. In some examples, the minimization of the summation of vector distances takes into account that each page is expected to be in exactly one grouping, such as because each page is expected to be part of one original document in the set of documents.

In some examples, the set of documents include a first document and a second document different from the first document. In some examples, the first document is of a first document type and the second document is of a second document type different from the first document type. In some examples, the determining a segmentation option includes determining a first group of pages in the plurality of pages that are a part of the first document and determining a second group of pages in the plurality of pages that are part of the second document.

In some examples, the segmentation option is determined using dynamic programming. In some examples, the dynamic programming includes breaking a problem down into smaller, simpler subproblems. In some examples, dynamic programming is helpful for finding a solution (e.g., a best solution) among a set of possible solutions. In some examples, the dynamic programming involves solving each subproblem only once and storing its solution so that it can be reused when needed, which leads to improved efficiency such as compared to naive recursive approaches. In some examples, the dynamic programming includes selecting a first segmentation option for a first page in the plurality of pages and selecting a second segmentation option for a second page in the plurality of pages based at least in part on the first segmentation option.

According to some embodiments, at the process 140, an indication of the segmentation option is output. In some examples, the indication of the segmentation option is output to enable the disaggregation of the set of documents. For example, the set of documents may be segmented according to the segmentation option. In some examples, a user may be prompted to segment the set of documents according to the indication of the segmentation option. In some examples, a system may automatically segment the set of documents based on the indication of the segmentation option.

In some embodiments, method 100 may terminate at process 140. In some embodiments, method 100 may return to process 110 (or any other process from method 100) to provide an iterative loop, such as of receiving a set of documents, determining a segmentation option for the set of documents, and/or outputting an indication of the segmentation option.

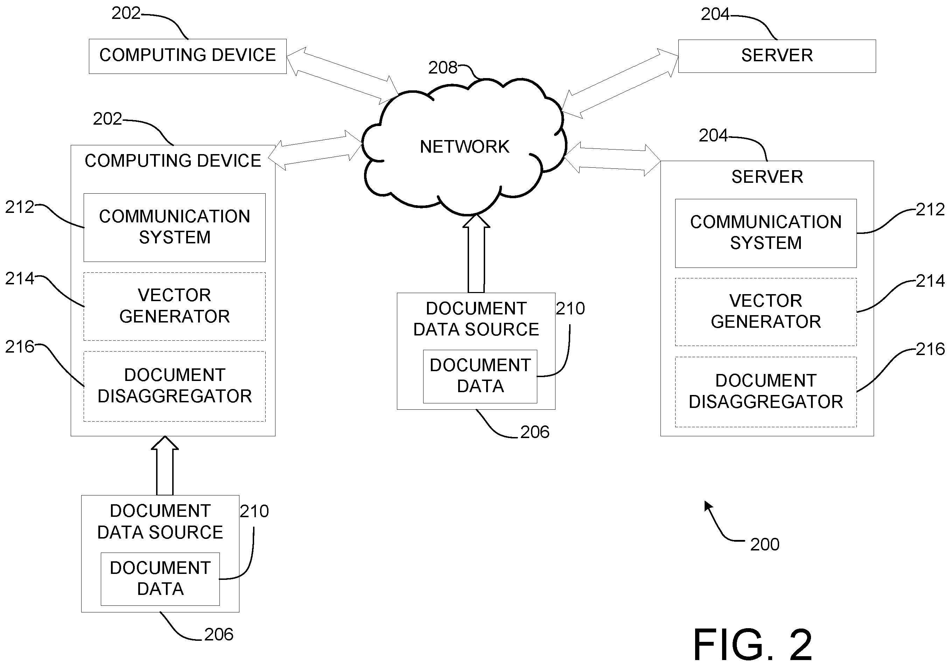

FIG. 2 shows an example of a system 200, in accordance with some aspects of the disclosed subject matter. In some embodiments, the system 200 is a system for disaggregating a set of documents. FIG. 2 is merely an example. One of the ordinary skilled in the art would recognize many variations, alternatives, and modifications. Although system 200 has been shown using a selected group of components, there can be many alternatives, modifications, and variations. For example, some of the components may be expanded and/or combined. Other components may be inserted into those noted above. Depending upon the example, the arrangement of components may be interchanged with others replaced. Further details of these components are found throughout the present disclosure.

In some embodiments, various components in the system 200 can execute software or firmware stored in non-transitory computer-readable medium to implement various processing steps. In some embodiments, various components and processors of the system 200 can be implemented by one or more computing devices including, but not limited to, circuits, a computer, a cloud-based processing unit, a processor, a processing unit, a microprocessor, a mobile computing device, and/or a tablet computer. In some embodiments, various components of the system 200 can be implemented on a shared computing device. In some embodiments, a component of the system 200 can be implemented on multiple computing devices. In some embodiments, various modules and components of the system 200 can be implemented as software, hardware, firmware, or a combination thereof.

In some embodiments, the system 200 includes one or more computing devices 202, one or more servers 204, one or more document data sources 206, and a communication network or network 208. In some embodiments, the computing device 202 can receive document data 210 from the document data source 206. Additionally, or alternatively, in some embodiments, the network 208 can receive document data 210 from the document data source 206.

In some embodiments, computing device 202 includes a communication system 212, vector generator or component 214, and/or a document disaggregator 216. In some embodiments, computing device 202 can execute at least a portion of the vector generator 214 to generate content vectors and/or content embeddings based on content extracted from pages of one or more documents. In some examples, the vector generator 214 generates vectors and/or embeddings based on text and/or image content. In some examples, the vector generator 214 generates semantic vectors and/or embeddings, such as based on semantic context (e.g., abstract meaning and/or contextual information) associated with the content based on which the vectors and/or embeddings are generated.

In some embodiments, the computing device 202 can execute at least a portion of the document disaggregator 216 to determine one or more segmentation options for a set of documents. For example, the document disggregator 216 may determine the segmentation options based on distances between the vectors generated by the vector generator 214. In some examples, the document disaggregator 216 may compute which ordering of pages maximize semantic similarity between adjacent pages, thereby minimizing vector distance between adjacent pages, such that the boundaries between documents in the set of documents can be accurately determined.

In some embodiments, server 204 includes a communication system 212, vector generator or component 214, and/or a document disaggregator 216. In some embodiments, computing device 202 can execute at least a portion of the vector generator 214 to generate content vectors and/or content embeddings based on content extracted from pages of one or more documents. In some examples, the vector generator 214 generates vectors and/or embeddings based on text and/or image content. In some examples, the vector generator 214 generates semantic vectors and/or embeddings, such as based on semantic context (e.g., abstract meaning and/or contextual information) associated with the content based on which the vectors and/or embeddings are generated.

In some embodiments, the server 204 can include at least a portion of functionality (e.g., one or more software and/or hardware modules) of the document disaggregator 216 to determine one or more segmentation options for a set of documents. For example, the document disggregator 216 may determine the segmentation options based on distances between the vectors generated by the vector generator 214. In some examples, the document disaggregator 216 may compute which ordering of pages maximize semantic similarity between adjacent pages, thereby minimizing vector distance between adjacent pages, such that the boundaries between documents in the set of documents can be accurately determined.

Additionally, or alternatively, in some embodiments, computing device 202 can communicate data received from document data source 206 to the server 204 over a communication network 208, which can execute at least a portion of the vector generator 214 and/or the document disaggregator 216. In some embodiments, the vector generator 214 executes one or more portions of methods/processes disclosed herein and/or recognized by those of ordinary skill in the art, in light of the present disclosure. In some embodiments, the document disaggregator 216 executes one or more portions of methods/processes disclosed herein and/or recognized by those of ordinary skill in the art, in light of the present disclosure.

In some embodiments, computing device 202 and/or server 204 can be any suitable computing device or combination of devices, such as a desktop computer, a vehicle computer, a mobile computing device (e.g., a laptop computer, a smartphone, a tablet computer, a wearable computer, etc.), a server computer, a virtual machine being executed by a physical computing device, a web server, etc. Further, in some embodiments, there may be a plurality of computing device 202 and/or a plurality of servers 204.

In some embodiments, document data source 206 can be any suitable source of document data (e.g., data generated from a computing device, data stored in a repository, data generated from a software application, data generated via a document scanner, etc.) In some embodiments, document data source 206 can include memory storing document data (e.g., local memory of computing device 202, local memory of server 204, cloud storage, portable memory connected to computing device 202, portable memory connected to server 204, etc.). In some embodiments, document data source 206 can include an application configured to generate document data and provide the document data via a software interface. In some embodiments, document data source 206 can be local to computing device 202. In some embodiments, document data source 206 can be remote from computing device 202, and can communicate document data 210 to computing device 202 (and/or server 204) via a communication network (e.g., communication network 208).

In some embodiments, the document data source 206 may include a repository that is implemented using any one of the configurations described below. In some embodiments, a data repository may include random access memories, flat files, XML files, and/or one or more database management systems (DBMS) executing on one or more database servers or a data center. In some embodiments, a database management system may be a relational (RDBMS), hierarchical (HDBMS), multidimensional (MDBMS), object oriented (ODBMS or OODBMS) or object relational (ORDBMS) database management system, and the like. In some embodiments, the data repository may be, for example, a single relational database. In some embodiments, the data repository may include a plurality of databases that can exchange and aggregate data by data integration process or software application. In some embodiments, at least part of the data repository may be hosted in a cloud data center. In some embodiments, a data repository may be hosted on a single computer, a server, a storage device, a cloud server, or the like. In some embodiments, a data repository may be hosted on a series of networked computers, servers, or devices. In some embodiments, a data repository may be hosted on tiers of data storage devices including local, regional, and central.

In some embodiments, the document data 210 may include image data, text data, formatting data, and/or other types of data that may be associated with physical documents that are converted into a virtual/digital format.

In some embodiments, communication network 208 can be any suitable communication network or combination of communication networks. For example, communication network 208 can include a Wi-Fi network (which can include one or more wireless routers, one or more switches, etc.), a peer-to-peer network (e.g., a Bluetooth network), a cellular network (e.g., a 3G network, a 4G network, a 5G network, etc., complying with any suitable standard), a wired network, etc. In some embodiments, communication network 208 can be a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, a wide area network (WAN), a public network (e.g., the Internet), a private or semi-private network (e.g., a corporate or university intranet), any other suitable type of network, or any suitable combination of networks. In some embodiments, communication links (arrows) shown in FIG. 2 can each be any suitable communications link or combination of communication links, such as wired links, fiber optics links, Wi-Fi links, Bluetooth^{®} links, cellular links, satellite links, etc.

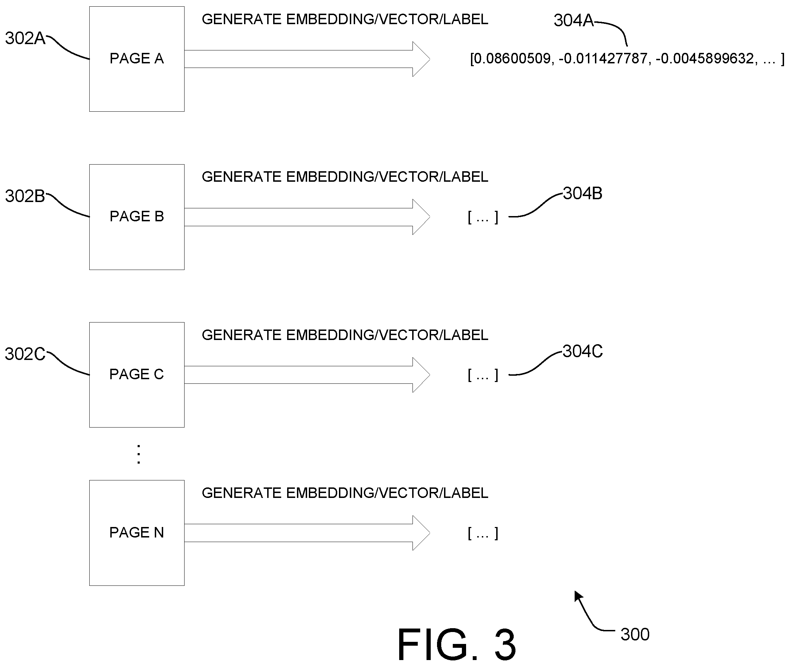

FIG. 3 illustrates an example diagram 300 of generating content vectors, according to certain embodiments of the present disclosure. The diagram 300 includes a plurality of pages 302 that form, at least in part, a set of documents. For example, the plurality of pages 302 can include a first page 302A, a second page 302B, and a third page 302C. In some examples, the plurality of pages 302 can include any number of pages and is not necessarily limited to the three pages shown.

According to some embodiments, the pages 302 (and/or one or more content items found on the pages) are converted to an embedding, vector, and/or label 304. For example, the first page 302A (and/or content items associated therewith) can be converted into a first vector 304A. As another example, the second page 302B (and/or content items associated therewith) can be converted into a second vector 304B. As yet another example, the third page 302C (and/or content items associated therewith) can be converted into a third vector 304C. In some examples, the first page 302A is different than the second page 302B and the third page 302C. In some examples, the first vector 304A is different than the second vector 304B and the third vector 302C.

In some examples, a plurality of content items are extracted from the plurality of pages. In some examples, the extracting may be performed via optical character recognition (OCR). In some examples, OCR technology uses algorithms and/or pattern recognition to identify characters, words, and/or other elements within an image or document, and then converts them into machine-readable text. In some examples, the extracting may be performed via optical image recognition (OIR). In some examples, OIR technology uses algorithms to recognize and/or interpret entire images (e.g., as opposed to just text).

In some examples, the extracting includes providing each document of the set of documents to a machine-learning model and receiving, from the machine-learning model, the extracted content. In some examples, the machine-learning model is an LLM. In some examples, the set of documents include at least one of text or an image. In some examples, the set of documents include both text and an image. In some examples, the extracted content is generated based on the at least one of text or an image.

According to some embodiments, the plurality of pages 302 and/or a plurality of extracted content items from the plurality of pages 302 are provided to a machine-learning model. In some examples, the machine-learning model is trained to generate the vectors 304. In some examples, the vectors are content vectors, such as because they are associated with content items, and/or semantic vectors, such as because they are generated based on the abstract meaning and/or context associated with the pages 302 (or content items of the pages 302).

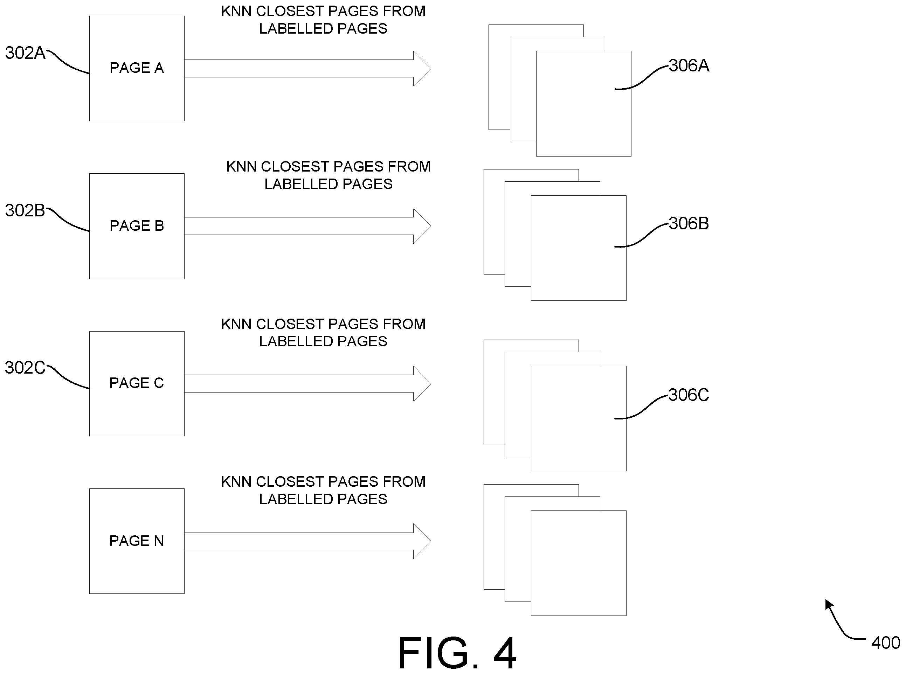

FIG. 4 illustrates an example diagram 400 of identifying nearest labelled pages to a given page, according to certain embodiments of the present disclosure. For each page in the set of documents (e.g., first page 302A, second page 302B, third page 302C, ... page 302N, etc.), a predetermined number of other pages in a set of labelled documents are determined to be nearest pages to the each page, such as the first nearest pages 306A which are the nearest pages to the first page 302A, the second nearest pages 306B which are the nearest pages to the second page 302B, the third nearest pages 306C which are the nearest pages to the third page 302C, ... and the Nth nearest pages 306N which are the nearest pages to the Nth page 302N.

In some examples, given the page 302A, one or more nearest labelled pages 306A can be identified from the remaining pages (e.g., the second page 302B, the third page 302C, . . ., page N). In some examples, given the page 302A, one or more nearest labelled pages 306A can be identified from a data set of labelled pages. For example, the data set of labelled pages from which the nearest labelled pages 306A are identified is manually generated and/or generated by an LLM model. In some examples, the identification of the nearest pages uses a search method, such as KNN.

In some examples, the identification uses the vector, embedding, and/or label generated from diagram 300 for a given page (e.g., the first page 302A) and compares it to vectors, embeddings, and/or labels of the pages in the data set of labelled pages to determine which of the remaining pages are the closest to the given page. In some examples, the identification uses the vector, or embedding, or label generated from diagram 300 for a given page (e.g., the first page 302A) and compares it to vectors, embeddings, and/or labels of the remaining pages (e.g., the second page 302B, the third page 302C, . . ., page N) to determine which of the remaining pages are the closest to the given page.

In some examples, if a distance between the vector 304A of the first page 302A and the vector of a second page is smaller than a distance between the vector 304A of the first page 302A and the vector of a third page, then the first page 302A is determined to be more similar to the second page than to the third page. In some examples, the nearest labelled pages 306 include the single nearest page. In some examples, the nearest labelled pages 306 include a plurality of nearest pages, such as two pages, or four pages, or ten pages, or any other configurable number of nearest pages less than the total number of pages in the set of documents.

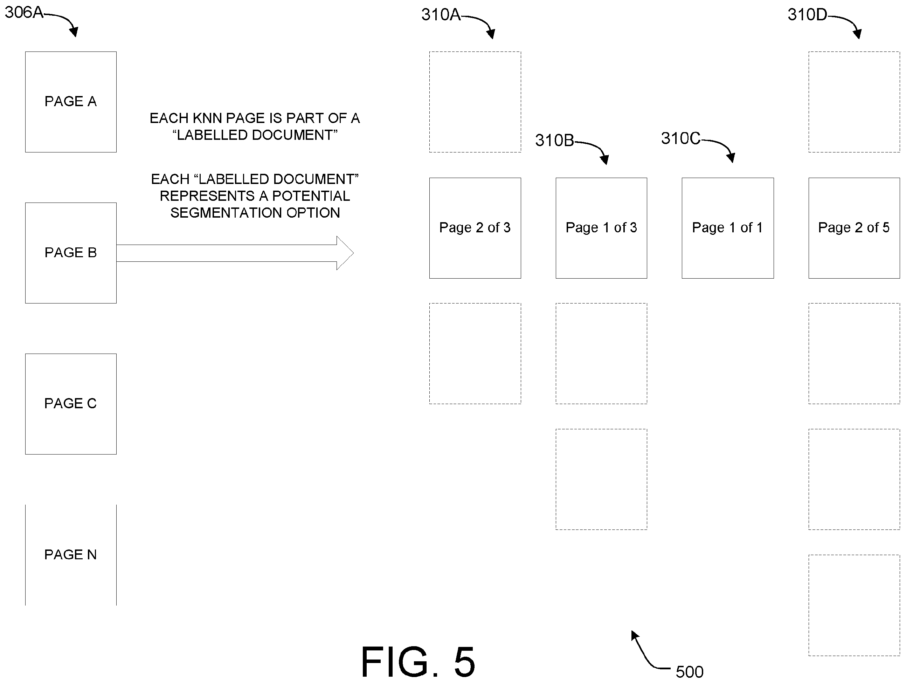

FIG. 5 illustrates an example diagram 500 of determining potential segmentation options, according to certain embodiments of the present disclosure. In some examples, for each page 302, after identifying the predetermined number of nearest pages 306 that are most similar to the each page 302, then for each page of the nearest pages 306, one or more segmentation options 310 are determined.

In some examples, the first nearest pages 306A is a plurality of pages (e.g., three pages). In some examples, the first nearest pages 306A may include a first page (e.g., PAGE A), a second page (e.g., PAGE B), and a third page (e.g., PAGE C). It should be recognized by those of ordinary skill in the art that while a specific number of pages are shown to be part of the first nearest pages 306A, in some examples more than or fewer than the number of pages shown may form the first nearest pages 306A.

In some examples, each page in the first nearest pages 306A is part of a document, such as a labelled document. In some examples, each labelled document represents the one or more segmentation options 310. In some examples, the PAGE B may be the second page of three pages in a labelled document, according to a first segmentation option 310A. In some examples, the PAGE B may be the first page of three pages in a labelled document, according to a second segmentation option 310B. In some examples, the PAGE B may be the first and only page in a labelled document, according to a third segmentation option 310C. In some examples, the PAGE B may be the second page of five pages in a labelled document, according to a fourth segmentation option 310D.

In some examples, segmentation options, such as the segmentation options 310, may be determined for each of the pages in the nearest pages 306. In some examples, a predetermined number of segmentation options 310 may be determined for each page in the nearest pages 306. For example, three segmentation option 310 may be determined, or five segmentation options 310, or ten segmentation options 310, or any number of segmentation options. Each segmentation option 310 may be a possible strategy for how to segment pages of a received set of documents to disaggregate the set of documents.

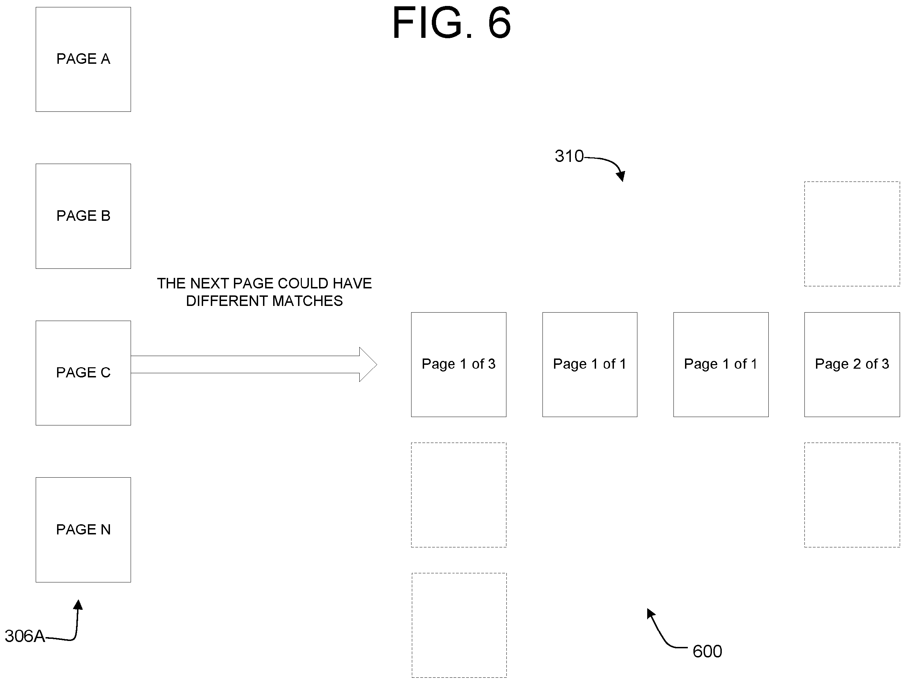

FIG. 6 illustrates another example diagram 600 of determining potential segmentation options, according to certain embodiments of the present disclosure. For example, while FIG. 5 illustrates potential segmentation options 310 with respect to PAGE B of the first nearest pages 306A, in some examples, PAGE C could have different segmentation options 310 than PAGE B. In some examples, each segmentation option 310 may still be a possible strategy for how to segment pages of a received set of documents to disaggregate the set of documents.

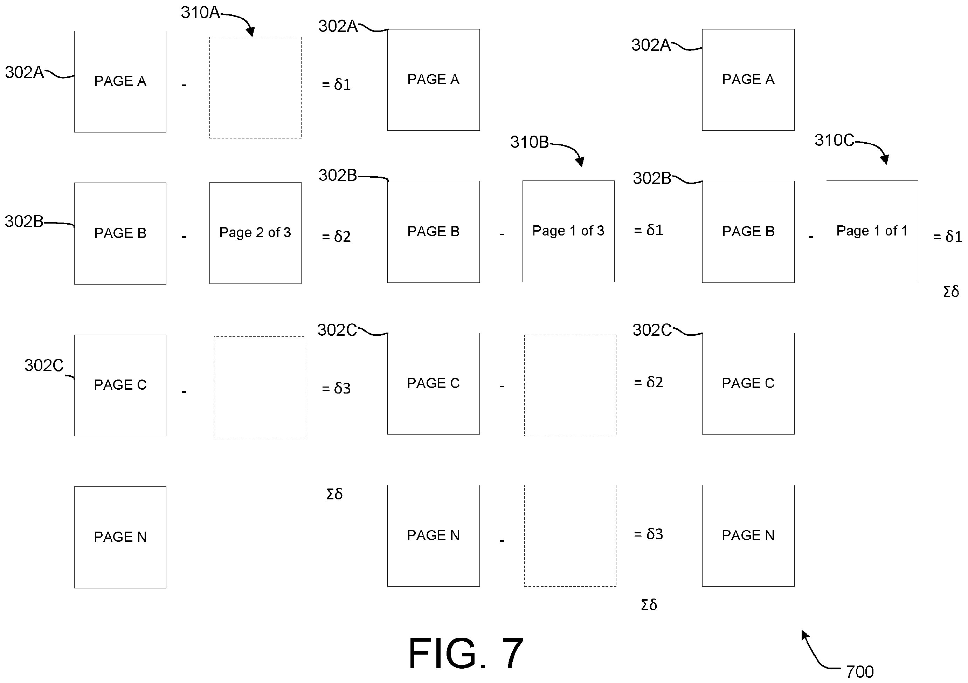

FIG. 7 illustrates an example diagram 700 of calculating distances δ related to segmentation options, according to certain embodiments of the present disclosure. In some examples, the distances δ are the vector distance between pages of a received set of documents (e.g., the first page 302A, second page 302B, third page 302C, etc.) and the pages of a labeled document, such as according to a given segmentation option (e.g., the first segmentation option 310A, the second segmentation option 310B, the third segmentation option 310C, etc.).

In some examples, a first distance δ1 may be calculated between an embedding, vector, and/or label corresponding to the first page 302A in a received set of documents and an embedding, vector, and/or label corresponding to the first page of a labelled document according to the first segmentation option 310A. In some examples, a second distance δ2 may be calculated between an embedding, vector, and/or label corresponding to the second page 302B in a received set of documents and an embedding, vector, and/or label corresponding to the second page of a labelled document according to the first segmentation option 310A. In some examples, a third distance δ3 may be calculated between an embedding, vector, and/or label corresponding to the third page 302C in a received set of documents and an embedding, vector, and/or label corresponding to the third page of a labelled document according to the first segmentation option 310A. Based on the calculated distances (e.g., the first distance δ1, second distance δ2, and third distance δ3), a total distance Σδ can be calculates. In some examples, the total distance Σδ for a given segmentation option 310 is the summation of the calculated distances (e.g., δ1, δ2, δ3, etc.) for the segmentation option 310.

In some examples, a total distance Σδ is calculated for each segmentation option 310. In some examples, the total distance Σδ is a total vector error for the segmentation option 310 to which the total distance Σδ corresponds. In some examples, a relatively lower total distance Σδ for a given segmentation option 310 indicates that the given segmentation option 310 is relatively accurate in regards to identifying the boundaries of a document in a received set of documents. In some examples, a relatively high total distance Σδ for a given segmentation option 310 indicates that the given segmentation option 310 is relatively inaccurate in regards to identifying the boundaries of a document in a received set of documents.

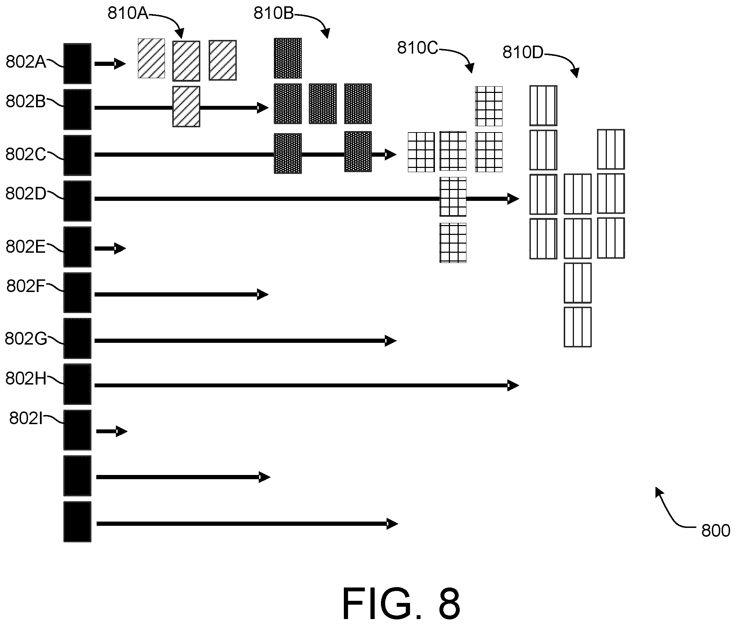

FIG. 8 illustrates an example diagram 800 of determining which combination of segmentation options minimizes the total distance Σδ for disaggregation, according to certain embodiments of the present disclosure. The diagram 800 includes a plurality of pages 802 that form, at least in part, a set of documents. For example, the plurality of pages 802 can include a first page 802A, a second page 802B, a third page 802C, a fourth page 802D, a fifth page 802E, a sixth page 802F, a seventh page 802G, an eighth page 802H, and a ninth page 802I. In some examples, the plurality of pages 802 can include any number of pages and is not necessarily limited to the number of pages shown.

The diagram 800 also includes a plurality of sets of segmentation options 810. For example, the plurality of sets of segmentation options 810 can include a first set of segmentation option 810A, a second set of segmentation option 810B, a third set of segmentation option 810C, and a fourth set of segmentation option 810D. In some examples, the sets of segmentation options 810 can include any number of sets of segmentation options and is not necessarily limited to the number of sets of segmentation options shown. In some examples, each set of segmentation options 810 includes one or more segmentation options.

In some examples, for one or more pages page 802 in the received set of documents, a corresponding set of segmentation options 810 are identified. In some examples, for the first page 802A, the first set of segmentation options 810A is identified. In some examples, the first set of segmentation options 810A includes three segmentation options. In some examples, for the second page 802B, the second set of segmentation options 810B is identified. In some examples, the second set of segmentation options 810B includes three segmentation options. In some examples, for the third page 802C, a third set of segmentation options 810C is identified. In some examples, the third set of segmentation options 810C includes three segmentation options. In some examples, for the fourth page 802D, a fourth set of segmentation options 810D is identified. In some examples, the fourth set of segmentation options 810D includes three segmentation options.

One of ordinary skill in the art should recognize that the examples provide in diagram 800 are merely examples and the embodiments of the present disclosure are not necessarily limited to such examples. For instance, in some examples, the number of segmentation options in one or more of the sets of segmentation options 810 can include any number of segmentation options and is not necessarily limited to the number of segmentation options shown.

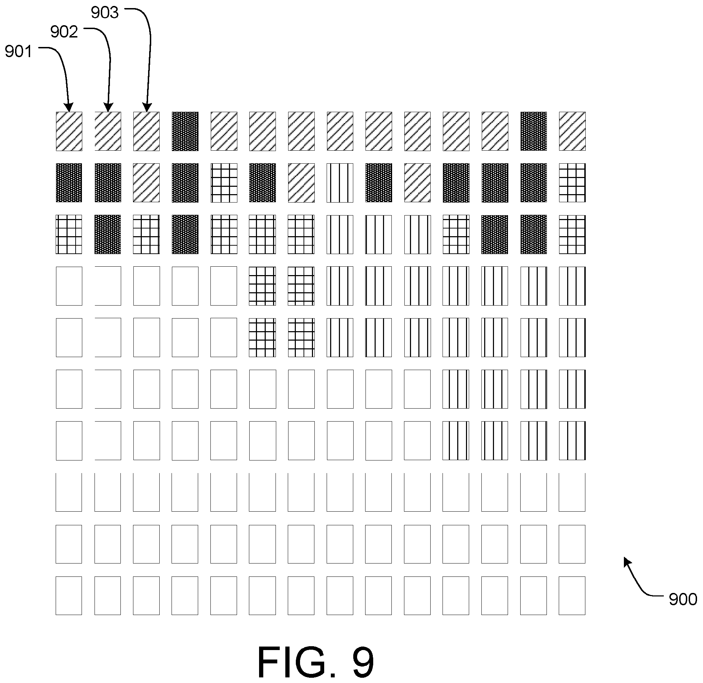

FIG. 9 illustrates an example diagram 900 of a dynamic programming approach for segmenting a set of documents, according to certain embodiments of the present disclosure. In some examples, a polynomial approach for finding the best combination of segmentation options includes testing each possible combination of the segmentation strategies. In some examples, the best combination of segmentation options is the combination of segmentation options with the lowest total calculated distance that also includes the most pages from the received set of documents. In some examples, the best combination of segmentation options includes each page from the received set of documents exactly once. In some examples, the polynomial approach can be improved upon with a dynamic programming approach, for example, improved by reducing computational complexity (e.g., reducing the use of computing resources and/or reducing the computing time).

In some examples, the diagram 900 includes a first combination 901 of segmentation options. In some examples, the first combination 901 uses the first page identified by the first set of segmentation options 810A of FIG. 8, the second page identified by the second set of segmentation options 810B, and the third page identified by the third set of segmentation options 810C. In some examples, the diagram 900 includes a second combination 902 of segmentation options. In some examples, the second combination 902 uses the first page identified by the first set of segmentation options 810A, the second page identified by the second set of segmentation options 810B, and the third page identified by the second set of segmentation options 810B. In some examples, the diagram 900 includes a third combination 903 of segmentation options. In some examples, the third combination 903 uses the first page identified by the first set of segmentation options 810A, the second page identified by the first set of segmentation options 810A, and the third page identified by the third set of segmentation options 810C. Additional and/or alternative examples of combinations of segmentation options should be recognized by those of ordinary skill in the art, at least in light of the teachings provided herein.

In some examples, the best combination of segmentation options is determined using dynamic programming. In some examples, the dynamic programming includes breaking a problem down into smaller, simpler subproblems. In some examples, dynamic programming is helpful for finding a best solution among a set of possible solutions. In some examples, the dynamic programming involves solving each subproblem only once and storing its solution so that it can be reused when needed, which leads to improved efficiency such as compared to naive recursive approaches. In some examples, the dynamic programming includes selecting a first segmentation option for a first page in the plurality of pages and selecting a second segmentation option for a second page in the plurality of pages based at least in part on the first segmentation option.

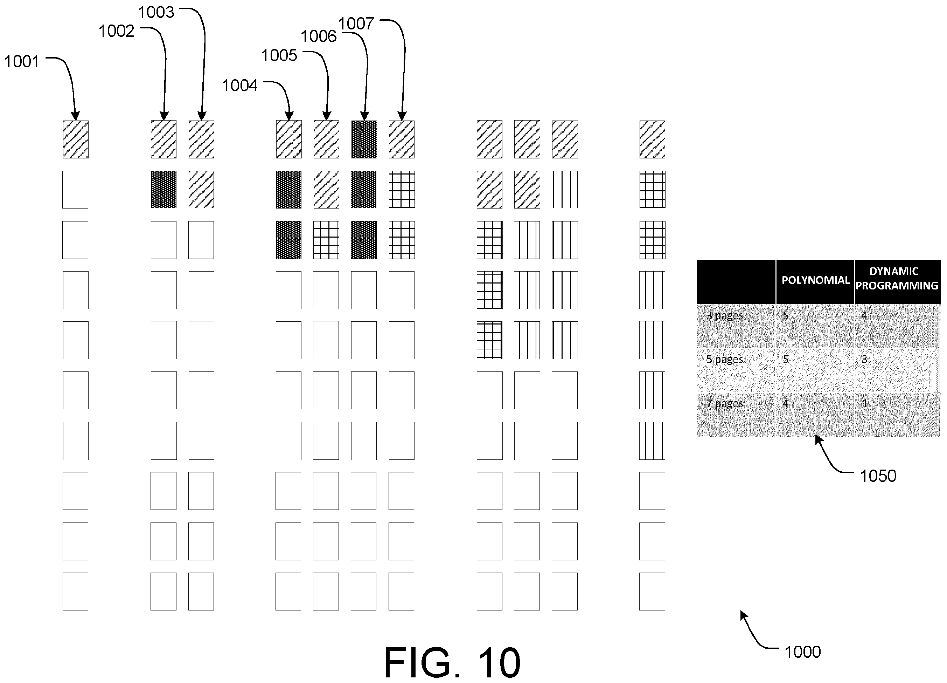

FIG. 10 illustrates an example diagram 1000 of segmenting a set of documents, according to certain embodiments of the present disclosure. In some examples, after a best solution for a given number of pages is found, other solutions may not have to be considered. In some examples, the best solution is the combination of segmentation options with the lowest total calculated distance that also includes the most pages from the received set of documents. In some examples, the best solution includes each page from the received set of documents exactly once.

In some examples, the diagram 1000 includes a first combination 1001 of segmentation options. In some examples, the first combination 1001 uses the first page identified by the first set of segmentation options 810A of FIG. 8. In some examples, the diagram 1000 includes a second combination 1002 of segmentation options. In some examples, the second combination 1002 uses the first page identified by the first set of segmentation options 810A and the second page identified by the second set of segmentation options 810B. In some examples, the diagram 1000 includes a third combination 1003 of segmentation options. In some examples, the third combination 1003 uses the first page identified by the first set of segmentation options 810A and the second page identified by the first set of segmentation options 810A.

In some examples, the diagram 1000 includes a fourth combination 1004 of segmentation options. In some examples, the fourth combination 1004 uses the first page identified by the first set of segmentation options 810A, the second page identified by the second set of segmentation options 810B, and the third page identified by the second set of segmentation options 810B. In some examples, the diagram 1000 includes a fifth combination 1005 of segmentation options. In some examples, the fifth combination 1005 uses the first page identified by the first set of segmentation options 810A, the second page identified by the first set of segmentation options 810A, and the third page identified by the third set of segmentation options 810C. In some examples, the diagram 1000 includes a sixth combination 1006 of segmentation options. In some examples, the sixth combination 1006 uses the first page identified by the second set of segmentation options 810B, the second page identified by the second set of segmentation options 810B, and the third page identified by the second set of segmentation options 810B. In some examples, the diagram 1000 includes a seventh combination 1007 of segmentation options. In some examples, the seventh combination 1007 uses the first page identified by the first set of segmentation options 810A, the second page identified by the third set of segmentation options 810C, and the third page identified by the third set of segmentation options 810C. Additional and/or alternative examples of combinations of segmentation options should be recognized by those of ordinary skill in the art, at least in light of the teachings provided herein.

In some examples, as illustrated in table 1050, using a polynomial approach, there may be five possible solutions for three pages, but then still also five possible solutions for five pages, and then four possible solutions for seven pages. In some examples, using a dynamic programming approach, there may be four possible solutions for three pages, three possible solutions for five pages, and then one possible solution for seven pages. Accordingly, in some examples, after a best solution for a given number of pages is found, other solutions may not have to be considered, using techniques provided herein. In some examples, techniques provided herein provide improved efficiency for determining an accurate solution for segmenting a set of documents, such as to disaggregate the set of documents.

In some examples, an entity may have a plurality of documents which they received, such as due to an acquisition. For example, in some industries, it is common to purchase land. In some examples, it is common practice, when an entity is transferring over paper documents to another entity, to scan everything (e.g., a relatively large number of documents in a filing cabinet). In some examples, by purchasing land, the purchasing entity also acquires all of the records that go with it, such as contracts, business correspondences, memos, surveys, etc. In some examples, the paper documents include about 10,000 documents. In some examples, each document averages about 100 pages. In some examples, there are roughly a million pages of documents. In some examples, entities may not know what is in the documents. In some examples, the entities do not have a good way of searching through the documents or separating the documents. In some examples, the entities may have a rough idea of which pages are associated with which other pages. In some examples, the entities may require subject matter experts, like lawyers, to go through and read each of the pages individually to determine how to segment the documents. In some examples, this manual process which relies on subject matter experts is very time-consuming and expensive.

In some examples, techniques provided herein make the documents and the information in the documents more available, more searchable, more understandable, etc. In some examples, mechanisms provided herein identify which pages in the set of documents (e.g., a PDF) are grouped together as part of the same physical document. In some examples, it is challenging to identify which pages are grouped together because the pages can be relatively heterogeneous. For example, if one document in the set of documents is a mineral lease, a first page may include only text, a second page may include a map or image, and a third page may include a signature page. Therefore, in some examples may be difficult to group pages based on visual similarity. In some examples, text and/or images may be extracted from the pages using OCR. In some examples, an LLM, such as GPT-4, may be used to do the OCR extraction.

In some examples, the text and/or images received from each page are used to create an embedding vector for that page. In some examples, the embedding vectors may be generated via a machine-learning model. In some examples, using the text and/or images for each page, an embedding vector is generated. In some examples, the embedding vector is a semantic representation of the text and/or images for each page. In some examples, a labeled set of examples are created. In some examples, the labeled examples are creates manually. In some examples, using the labeled set of examples and the embedding vectors, for each page, the embedding vector can be used to search the labeled examples using a KNN search strategy.

In some examples, using KNN, for each page, techniques provided herein can identify examples of the closest pages from the set of labeled documents. In some examples, ten (10) closest pages can be identified. In some examples, each of the labeled documents are multi-page documents. In some examples, there is a similarity between each page of the received document and the labeled documents. In some examples, for a given PDF, page two is similar to page two out of three of a labelled document or page one out of three of a labelled document or page one out of one or page two out of five. Each of these possible similarities can be a segmentation strategy or option.

Each of the segmentation options provides a potential option for how to break apart the PDF. In some examples, once a KNN search is done for each one hundred pages in a PDF, then the ten nearest labeled examples have been identified for each of the one hundred pages. In some examples, there are one thousand different options for how to segment the PDF (e.g., one hundred pages multiplied by ten nearest pages).

In some examples, the one thousand options are fit together like a puzzle in a way that maximizes the similarity between the pages in the PDF and the labelled examples. In some examples, every page in the PDF is used once to perfectly segment the PDF without any pages missing.

In some examples, the PDF is broken apart in a way that reduces the total amount of distance in terms of the embedding vectors, i.e. the semantic similarity between the labeled examples and the PDF document. In some examples, a dynamic programming algorithm is used to figure out the best solution possible for page one, and then figure out the best solution possible for page two, and so on. In some examples, the dynamic programming algorithm identifies the overall best solution while doing less computation than a brute force algorithm, such as trying every single different combination of segmentation options.

In some examples, it is not known what content is in the PDF. In some examples, there may be about three hundred (300) different document types of labelled examples to which the PDF can be compared. In some examples, if two embedding vectors have the same abstract meaning, then the distance between the vectors would be zero. In some examples, if the two embedding vectors have very different abstract meanings, then the distance between the vectors would be relatively large. In some examples, the distance between vectors is measured using cosine similarity or cosine distance.

In some examples, for a one hundred-page document, if two pages in the middle of the document are verified, then the solutions are constrained. In some examples, by accurately identifying pages in the PDF document, the degrees of freedom for identifying the remaining pages in the PDF document are decreased. In some examples, there is a feedback element to improve predictions over time, as well as constraining the algorithm to come up with better solutions as pages are labeled.

In some examples, a label is a prediction of to what type of document a page corresponds. For example, a page may be predicted to be a memo, or a business correspondence, or a contract, etc., and be labelled based on the prediction. In some examples, a human can verify the label, and thereby verify the prediction.

In some examples, mechanisms provided herein receive a raw PDF, such as having unknown content, and a set of labeled pages, which are a number of pages which have been identified as being part of the same physical document with a type of document classification. In some examples, using the text for pages and embeddings for that text, a KNN search can be performed on labeled data to find pages that are similar to each other. In some examples, the KNN search is used to classify with what label a page should be assigned.

In some examples, the goal is to minimize overall total distance with segmentation options. In some examples, given a PDF and labeled examples, a distance can be calculated between each page of the PDF and a page of the labeled examples. In some examples, the distances can be summed up into a single value, which is a total distance. In some examples, mechanisms provided herein seek to minimize that total distance.

In some examples, each page in the PDF will have an identified ten nearest neighbors from the label data. In some examples, the ten nearest neighbors include good nearest neighbors, such as if there is a small distance with the nearest neighbors. In some examples, the ten nearest neighbors include bad nearest neighbors, such as if there is a large distance with the nearest neighbors. In some examples, all of the segmentation options are evaluated to determine the lowest total calculated distance.

In some examples, there should not be any conflicts between chosen segmentation options in a final combination of segmentation options. In some examples, if there is an outlier page in the PDF which does not actually belong to any document in set of documents (e.g., PDF), then mechanisms provided herein may force the outlier page to be assigned to one of the documents in the set of documents. In some examples, it may be determined that the outlier page should not be assigned to any document and the page will be deleted or omitted from the final combination of segmentation options. In some examples, the outlier page may be marked as unlabeled, undetermined, or otherwise indicated as being an outlier that likely does not belong to any document in the set of documents.

In some examples, an embedding and/or vector is generated for the text and/or images of a page in a document. In some examples, the embedding is a series of numbers. In some examples, the embeddings exist within a vector space. In some examples, a distance between embeddings can be found. In some examples, the embeddings represent a semantic (e.g., abstract) meaning of text and/or images on a page. In some examples, if two pages are determined to be similar, such as based on a distance between embeddings corresponding to the pages, then the two pages have the same classification (e.g., a business correspondence, a memo, an n-page document, etc.)

In some examples, if a first page is classified as a first page in a memo, and then a second page is determined to be similar to the first page, then the second page may be classified as a first page in a memo as well. In some examples, if a page in a PDF is similar to a labelled page, and the labelled page is classified as a second page in a memo, then the page in the PDF may be classified as a second page in a memo as well.

In some examples, there can be a plurality of segmentation options for the different kind of non-conflicting segmentation options identified. In some examples, the plurality of segmentation options can be evaluated to determine what combination of segmentation options from the plurality of segmentation options are the best. In some examples, dynamic programming provides advantageous efficiency in evaluating the plurality of options. In some examples, using a polynomial approach, as the number of KNNs grow and as the length of a document grows, the number of options being compared will grow in polynomial time. In some examples, using a polynomial approach, it will become exponentially more expensive to evaluate the plurality of segmentation options, which is why dynamic programming can be a beneficial alternative to a polynomial approach. In some examples, a dynamic programming approach or a polynomial approach would improve upon existing techniques (e.g., manual techniques) for segmenting a set of documents.

In some examples, embodiments disclosed herein may also be useful in scenarios where the set of documents comprises or represents scanned pages of incoming post for an organization; for example the number of pages may be relatively large on a particular day or period and each is required to be digitized for distribution and/or storage. Pages may be scanned out of order and/or it may not be evident where the boundaries of individual letters start and/or end, which attachments (if any) belong to which letters and/or to which department or individual(s) the letters is or are directed to. Methods and systems herein may enable a large batch of documents to be saved as a single file wherein the segmenting may be utilized to disaggregate said documents into individual letters with associated attachments (if any). Identification of departments, teams and/or individuals to who the disaggregated documents are addressed may also be performed and, in some cases, said documents might automatically be sent via email (or similar) to addresses associated with such identified departments, teams and/or individuals.

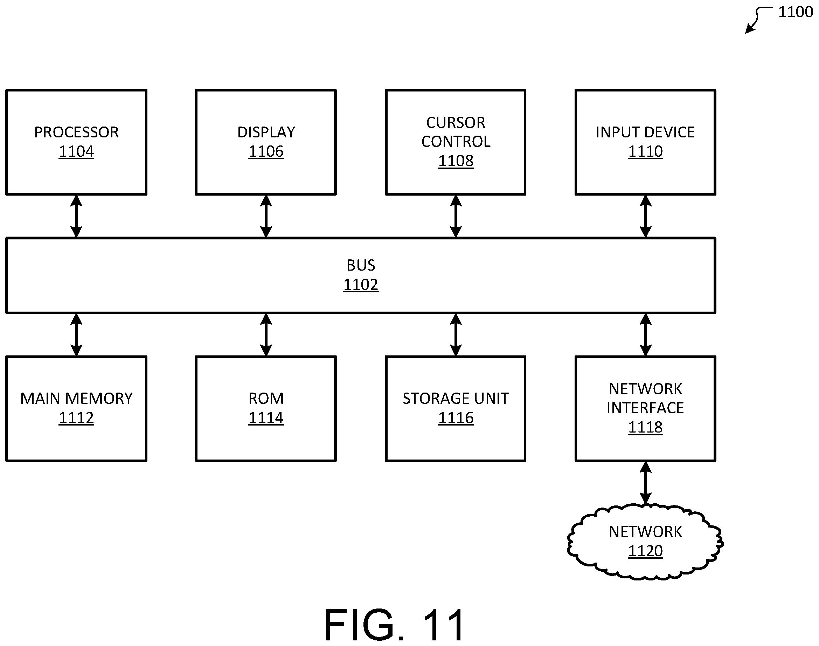

FIG. 11 is a simplified diagram showing a computing system for implementing a system 1100 for disaggregating a set of documents in accordance with at least one example set forth in the disclosure. This diagram is merely an example, which should not unduly limit the scope of the claims. One of ordinary skill in the art would recognize many variations, alternatives, and modifications.

The computing system 1100 includes a bus 1102 or other communication mechanism for communicating information, a processor 1104, a display 1106, a cursor control component 1108, an input device 1110, a main memory 1112, a read only memory (ROM) 1114, a storage unit 1116, and a network interface 1118. In some embodiments, some or all processes (e.g., steps) of methods and/or processes disclosed herein are performed by the computing system 1100. In some embodiments, the bus 1102 is coupled to the processor 1104, the display 1106, the cursor control component 1108, the input device 1110, the main memory 1112, the read only memory (ROM) 1114, the storage unit 1116, and/or the network interface 1118. In certain embodiments, the network interface is coupled to a network 1120. For example, the processor 1104 includes one or more general purpose microprocessors. In some embodiments, the main memory 1112 (e.g., random access memory (RAM), cache and/or other dynamic storage devices) is configured to store information and instructions to be executed by the processor 1104. In certain embodiments, the main memory 1112 is configured to store temporary variables or other intermediate information during execution of instructions to be executed by processor 1104. For example, the instructions, when stored in the storage unit 1116 accessible to processor 1104, render the computing system 1100 into a special-purpose machine that is customized to perform the operations specified in the instructions. In some embodiments, the ROM 1114 is configured to store static information and instructions for the processor 1104. In certain embodiments, the storage unit 1116 (e.g., a magnetic disk, optical disk, or flash drive) is configured to store information and instructions.

In some embodiments, the display 1106 (e.g., a cathode ray tube (CRT), an LCD display, or a touch screen) is configured to display information to a user of the computing system 1100. In some embodiments, the input device 1110 (e.g., alphanumeric and other keys) is configured to communicate information and commands to the processor 1104. For example, the cursor control component 1108 (e.g., a mouse, a trackball, or cursor direction keys) is configured to communicate additional information and commands (e.g., to control cursor movements on the display 1106) to the processor 1104.

According to certain embodiments, a method for disaggregating a set of documents is provided. The method includes receiving the set of documents. The set of documents includes a plurality of pages. The method further includes extracting a plurality of content items from the plurality of pages, and providing the plurality of extracted content items to a machine-learning model. The machine-learning model is trained to generate content vectors. The method further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. The segmentation option indicates that a group of pages in the plurality of pages belong to a specific document. The method is performed using one or more processors. For example, the method is implemented according to at least FIG. 1, FIG. 2, FIG. 3, FIG. 4, FIG. 5, FIG. 6, FIG. 7, FIG. 8, FIG. 9, FIG. 10, and/or FIG. 11.

In some embodiments, the method further includes outputting an indication of the segmentation option. In some embodiments, the determining a segmentation option includes selecting the group of pages among a plurality of groupings of the plurality of pages, such that a summation of the vector distances between neighboring pages in the group of pages, within the selected grouping, is minimized. In some embodiments, each page of the plurality of pages is part of no more than one selected grouping. In some embodiments, each potential nearest labelled page of the plurality of potential nearest labelled pages is associated with a content similarity to the respective page for which the plurality of potential nearest labelled pages were determined.

In some embodiments, the extracting a plurality of content items includes providing each document of the set of documents to a large language model (LLM), and receiving, from the LLM, the extracted content. In some embodiments, the set of documents include at least one of text or an image, and the extracted content is generated based on the at least one of text or an image. In some embodiments, the determining, for each page of the plurality of pages, a plurality of potential nearest labelled pages includes: calculating the plurality of vector distances, wherein each vector distance of the plurality of vector distances is a distance between the content vector corresponding to the each page and the content vector corresponding to another page of the plurality of pages; and selecting the plurality of potential nearest labelled pages to be a predetermined number of the pages of the plurality of pages with content vectors that are closest in distance to the each page. In some embodiments, the plurality of vector distances are calculated using cosine similarity.

In some embodiments, the determining a segmentation option includes determining the segmentation option using dynamic programming. In some embodiments, the determining the segmentation option using dynamic programming includes selecting a first segmentation option for a first page in the plurality of pages and selecting a second segmentation option for a second page in the plurality of pages based at in least in part on the first segmentation option. In some embodiments, the set of documents corresponds to a plurality of documents, and one or more documents of the plurality of documents are labelled with a corresponding document type. In some embodiments, the set of documents include a first document of a first document type and a second document of a second document type different from the first document type. In some embodiments, the determining a segmentation option includes determining a first group of pages in the plurality of pages that are a part of the first document and determining a second group of pages in the plurality of pages that are a part of the second document.

According to certain embodiments, a system for disaggregating a set of documents is provided. The system includes at least one processor, and at least one memory storing instructions that, when executed by the at least one processor, cause the system to perform a set of operations. The set of operations includes: receiving the set of documents. The set of documents includes a plurality of pages. The set of operations further includes extracting a plurality of content items from the plurality of pages, and providing the plurality of extracted content items to a machine-learning model. The machine-learning model is trained to generate content vectors. The set of operations further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. The segmentation option indicates that a group of pages in the plurality of pages belong to a specific document. For example, the system is implemented according to at least FIG. 1, FIG. 2, FIG. 3, FIG. 4, FIG. 5, FIG. 6, FIG. 7, FIG. 8, FIG. 9, FIG. 10, and/or FIG. 11.

In some embodiments, the set of operations further comprises outputting an indication of the segmentation option. In some embodiments, the determining a segmentation option includes selecting the group of pages among a plurality of groupings of the plurality of pages, such that a summation of the vector distances between neighboring pages in the group of pages, within the selected grouping, is minimized, while each page of the plurality of pages are part of no more than one selected grouping. In some embodiments, the set of documents include at least one of text or an image, and the extracted content is generated based on the at least one of text or an image. In some embodiments, the determining, for each page of the plurality of pages, a plurality of potential nearest labelled pages includes: calculating the plurality of vector distances, wherein each vector distance of the plurality of vector distances is a distance between the content vector corresponding to the each page and the content vector corresponding to another page of the plurality of pages; and selecting the plurality of potential nearest labelled pages to be a predetermined number of the pages of the plurality of pages with content vectors that are closest in distance to the each page.

According to certain embodiments, a method for disaggregating a set of documents is provided. The method includes receiving the set of documents. The set of documents includes a plurality of pages. The set of documents corresponds to a plurality of documents. The method further includes extracting a plurality of content items from the plurality of pages, and providing the plurality of extracted content items to a machine-learning model. The machine-learning model is trained to generate content vectors. The method further includes receiving, from the machine learning model, a plurality of content vectors corresponding to the plurality of extracted content items, determining, for each page of the plurality of pages, a plurality of potential nearest labelled pages in one or more labelled documents and a plurality of vector distances from the plurality of potential nearest labelled pages, based on the plurality of content vectors, and determining a segmentation option based at least in part on the plurality of vector distances. The segmentation option indicates that a group of pages in the plurality of pages belong to a specific document of the plurality of documents. The method further includes outputting an indication of the segmentation option, thereby enabling the disaggregation of the set of documents. The method is performed using one or more processors. For example, the method is implemented according to at least FIG. 1, FIG. 2, FIG. 3, FIG. 4, FIG. 5, FIG. 6, FIG. 7, FIG. 8, FIG. 9, FIG. 10, and/or FIG. 11.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various aspects of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for disaggregating a set of documents, the method comprising:
receiving (110) the set of documents, wherein the set of documents comprises a plurality of pages;
extracting (115) a plurality of content items from the plurality of pages;
providing (120) the plurality of extracted content items to a machine-learning model, wherein the machine-learning model is trained to generate content vectors;
receiving (125), from the machine learning model, a plurality of content vectors corresponding to the plurality of extracted content items;
determining (130), for each page of the plurality of pages, a plurality of potential nearest labelled pages in one or more labelled documents and a plurality of vector distances from the plurality of potential nearest labelled pages, based on the plurality of content vectors; and
determining (135) a segmentation option based at least in part on the plurality of vector distances, wherein the segmentation option indicates that a group of pages in the plurality of pages belong to a specific document;
wherein the method is performed by one or more processors.

2. The method of claim 1, further comprising outputting an indication of the segmentation option.

3. The method of claim 1 or claim 2, wherein the determining a segmentation option includes selecting the group of pages among a plurality of groupings of the plurality of pages, such that a summation of the vector distances between neighboring pages in the group of pages, within the selected grouping, is minimized.

4. The method of claim 3, wherein each page of the plurality of pages is part of no more than one selected grouping.

5. The method of any preceding claim, wherein each potential nearest labelled page of the plurality of potential nearest labelled pages is associated with a content similarity to the respective page for which the plurality of potential nearest labelled pages were determined.

6. The method of any preceding claim, wherein the extracting a plurality of content items includes providing each document of the set of documents to a large language model (LLM), and receiving, from the LLM, the extracted content.

7. The method of any preceding claim, wherein the set of documents include at least one of text or an image, and wherein the extracted content is generated based on the at least one of text or an image.

8. The method of any preceding claim, wherein the determining, for each page of the plurality of pages, a plurality of potential nearest labelled pages comprises:
calculating the plurality of vector distances, wherein each vector distance of the plurality of vector distances is a distance between the content vector corresponding to the each page and the content vector corresponding to another page of the plurality of pages; and
selecting the plurality of potential nearest labelled pages to be a predetermined number of the pages of the plurality of pages with content vectors that are closest in distance to the each page.

9. The method of claim 8, wherein the plurality of vector distances are calculated using cosine similarity.

10. The method of any preceding claim, wherein the determining a segmentation option includes determining the segmentation option using dynamic programming.

11. The method of claim 10, wherein the determining the segmentation option using dynamic programming includes selecting a first segmentation option for a first page in the plurality of pages and selecting a second segmentation option for a second page in the plurality of pages based at in least in part on the first segmentation option.

12. The method of any preceding claim, wherein the set of documents corresponds to a plurality of documents, and wherein one or more documents of the plurality of documents are labelled with a corresponding document type, wherein optionally the set of documents include a first document of a first document type and a second document of a second document type different from the first document type.

13. The method of claim 12, wherein the determining a segmentation option includes determining a first group of pages in the plurality of pages that are a part of the first document and determining a second group of pages in the plurality of pages that are a part of the second document.

14. A method for disaggregating a set of documents, the method comprising:
receiving the set of documents, wherein the set of documents comprises a plurality of pages, and wherein the set of documents corresponds to a plurality of documents;
extracting a plurality of content items from the plurality of pages;
providing the plurality of extracted content items to a machine-learning model, wherein the machine-learning model is trained to generate content vectors;
receiving, from the machine learning model, a plurality of content vectors corresponding to the plurality of extracted content items;
determining, for each page of the plurality of pages, a plurality of potential nearest labelled pages in one or more labelled documents and a plurality of vector distances from the plurality of potential nearest labelled pages, based on the plurality of content vectors;
determining a segmentation option based at least in part on the plurality of vector distances, wherein the segmentation option indicates that a group of pages in the plurality of pages belong to a specific document of the plurality of documents; and
outputting an indication of the segmentation option, thereby enabling the disaggregation of the set of documents;
wherein the method is performed by one or more processors.

15. A system for disaggregating a set of documents, the system comprising:
at least one processor; and
at least one memory storing instructions that, when executed by the at least one processor, cause the system to perform a set of operations in accordance with any preceding claim.
